# FASCICULE DE BREVET EUROPEEN

(11) **EP 3 647 208 B1**
(45) Date de publication et mention de la délivrance du brevet: **31.03.2021**
(21) Numéro de dépôt: 19199037.3
(22) Date de dépôt: 23.09.2019
(51) Int. Cl.: B64F 5/50, B66F 9/00, B64F 5/10

(54) **CHARIOT DE TRANSPORT**
TRANSPORTWAGEN
TRANSPORT TRUCK

(30) Priorité: 28.09.2018 FR 1871103
(43) Date de publication de la demande: 06.05.2020
(73) Titulaire: AIRBUS OPERATIONS, 31060 Toulouse Cedex 9 (FR); Airbus, 31700 Blagnac (FR)
(72) Inventeur: DATAS, Jean-Marc, 31060 TOULOUSE Cedex 9 (FR); BOURIQUET, Jacques, 31770 COLOMIERS (FR); BRINDEAU, Jean-Mickael, 31700 BLAGNAC (FR); AQUILA, André, 31700 CORNEBARRIEU (FR); GUIBERT, Patrick, 31830 PLAISANCE DU TOUCH (FR); DARBONVILLE, Nicolas, 31200 TOULOUSE (FR); AUTRET, Thomas, 31700 BEAUZELLE (FR)
(74) Mandataire: Cabinet Le Guen Maillet

(56) Documents cités:
- GB-A- 2 473 100
- US-A1- 2014 353 894
- US-A1- 2017 120 443
- US-B1- 8 661 684

## Description

### DOMAINE TECHNIQUE

La présente invention concerne un chariot de transport, en particulier pour une aile d'un aéronef, ainsi qu'un système de manutention comportant un tel chariot de transport.

### ETAT DE LA TECHNIQUE ANTERIEURE

Dans le cadre de l'assemblage d'une aile d'un aéronef, le transport de l'aile de son lieu de stockage à son lieu d'assemblage s'effectue à l'aide de chariots. Chaque chariot supporte une partie de l'aile et un déplacement synchronisé des chariots permet d'amener l'aile au niveau de sa position de fixation sur le fuselage.

Bien que de tels chariots (voir par exemple le document US2014/353894 A1) donnent entière satisfaction, ils sont relativement encombrants et difficiles à manœuvrer.

### EXPOSE DE L'INVENTION

Un objet de la présente invention est de proposer un chariot de transport, en particulier pour une aile d'aéronef, qui soit moins encombrant et qui permette d'améliorer la cadence de fabrication grâce à une meilleure manœuvrabilité.

A cet effet, est proposé un chariot de transport destiné à transporter une charge et comportant :
- une base comportant des moyens de déplacement,
- un plateau monté mobile en translation sur la base selon une direction de translation X,
- un premier système motorisé qui déplace le plateau,
- une plateforme hexapode qui comporte une plateforme et un ensemble de six vérins où chacun est monté articulé entre le plateau et la plateforme et où la plateforme comporte une pluralité de points d'appui destinés à venir sous la charge, et
- une unité de contrôle qui commande les moyens de déplacement, le premier système motorisé et chaque vérin.

L'utilisation d'une plateforme hexapode permet de positionner finement l'aile au niveau de sa position de fixation sur le fuselage et l'utilisation d'un plateau mobile supportant la plateforme hexapode permet un ajustement de la position malgré un encombrement réduit autour de l'aéronef.

Avantageusement, chaque point d'appui prend la forme d'un réceptacle avec son ouverture orientée vers le haut.

Avantageusement, le chariot de transport comporte un premier réceptacle fixe sur la plateforme et un deuxième réceptacle mobile en translation selon une direction d'ajustement parallèle à la ligne passant par le centre des deux réceptacles.

Avantageusement, le chariot de transport comporte une chape montée sur la plateforme, un balancier monté mobile en rotation sur la chape et deux réceptacles où chacun est disposé à une extrémité du balancier.

Avantageusement, la chape est montée sur la plateforme par l'intermédiaire d'une table croisée.

Avantageusement, le chariot de transport comporte une plateforme additionnelle montée mobile en translation sur la base, un bras articulé, motorisé et fixé par une de ses extrémités sur la plateforme additionnelle, une caméra qui est montée à une autre extrémité du bras, et un deuxième système motorisé qui déplace la plateforme additionnelle, et où l'unité de contrôle commande la caméra, le bras et le deuxième système motorisé.

L'invention propose également un système de manutention comportant une station d'attente et un chariot de transport selon l'une des variantes précédentes, où la station d'attente comporte une pluralité de poteaux où chacun est ancré dans le sol et où la partie haute de chaque poteau présente une palette avec au moins une fente et qui, pour chaque fente, porte un plot, où chaque plot comporte un épaulement en appui sur la palette, une partie arrondie s'étendant au-dessus de l'épaulement et destinée à supporter la charge, et un tronc s'étendant au-dessous de l'épaulement et qui s'insère dans la fente, et où pour chaque plot, le chariot de transport comporte un réceptacle dont la profondeur est inférieure à la longueur du tronc dépassant sous la palette.

Selon un mode de réalisation particulier, chaque fente présente une ouverture à l'une de ses extrémités et toutes les ouvertures sont orientées dans le même sens.

Selon un autre mode de réalisation particulier, chaque fente présente une ouverture à l'une de ses extrémités, les fentes d'au moins un poteau sont orientées dans le même sens, les fentes d'au moins un autre poteau sont orientées dans un autre sens, et la partie haute de chaque autre poteau est mobile en rotation autour d'un axe vertical.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue en perspective d'un système de manutention selon l'invention,
[Fig. 2] est une vue en perspective du détail II de la Fig. 1, et
[Fig. 3] est une vue en perspective et en coupe selon le plan III de la Fig. 1 lorsque le chariot de transport est en position pour soulever l'aile.

### EXPOSE DETAILLE DE MODES DE REALISATION

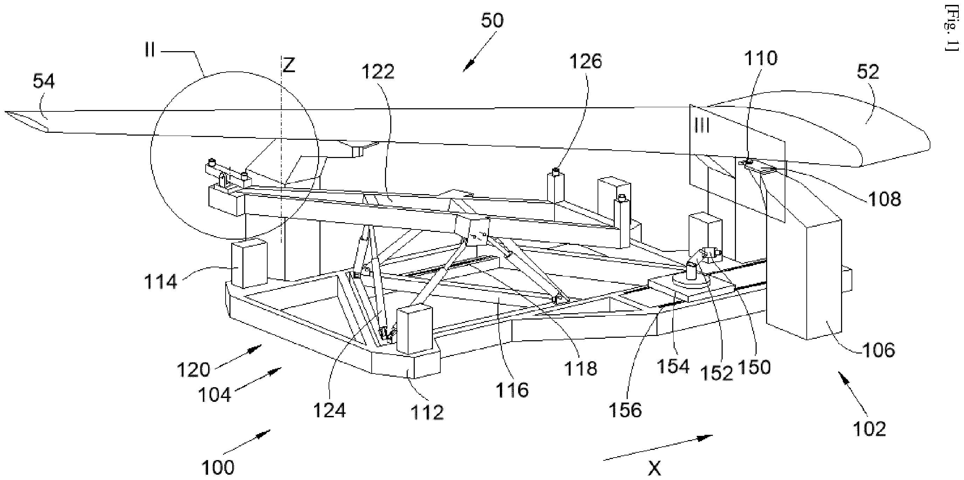

Dans la description qui suit, les termes relatifs à une position sont pris en référence à un chariot de transport portant un objet, ici une aile d'aéronef, c'est-à-dire comme il est représenté sur la Fig. 1. Dans la description qui suit, le système de manutention est utilisé pour une aile d'aéronef, mais il peut être utilisé pour tout autre charge.

La Fig. 1 montre un système de manutention 100 qui comporte une station d'attente 102 et un chariot de transport 104.

La station d'attente 102 permet de supporter l'aile 50 de l'aéronef en attendant que ladite aile 50 soit chargée sur le chariot de transport 104.

L'aile 50 présente classiquement une extrémité proximale 52 qui est l'extrémité qui est destinée à être fixée au fuselage de l'aéronef et une extrémité distale 54 qui est l'autre extrémité de l'aile 50.

La station d'attente 102 comporte une pluralité de poteaux 106 où pour chaque poteau 106, la partie basse est ancrée dans le sol et la partie haute présente une palette 108 qui est ici horizontale et qui porte au moins un plot 110 vertical qui lui-même supporte l'aile 50.

Dans le mode de réalisation de l'invention présenté à la Fig. 1, il y a trois poteaux 106 qui sont répartis avec deux poteaux 106 du côté de l'extrémité proximale qui est la plus large et un poteau 106 du côté de l'extrémité distale qui est la moins large. Bien sûr, une disposition et un nombre différent de poteaux 106 sont envisageables selon la charge 50.

Le chariot de transport 104 comporte une base 112 qui comporte des moyens de déplacement qui assure le déplacement du chariot de transport 104. Les moyens de déplacement prennent ici la forme de roues motorisées, ici au nombre de quatre. Les roues motorisées sont représentées ici par des blocs 114, chacun contenant un moteur et une roue entraînée par ledit moteur. Les moyens de déplacement peuvent prendre d'autres formes comme par exemple un générateur de coussin d'air.

Le chariot de transport 104 comporte un plateau 116 qui est monté mobile en translation sur la base 112 selon une direction de translation X. Le chariot de transport 104 comporte un premier système motorisé qui déplace le plateau 116 en translation.

Le guidage du plateau 116 est réalisé par tous moyens appropriés comme par exemple des rails 118 fixés à la base 112 parallèlement à la direction de translation X.

Le chariot de transport 104 comporte une plateforme hexapode 120 (également appelée plateforme de Stewart) qui comporte une plateforme 122 et un ensemble de six vérins 124 où chacun est monté articulé entre le plateau 116 et la plateforme 122. La plateforme 122 est l'élément qui reçoit l'aile 50 à transporter.

Le positionnement des vérins 124 est classique, c'est-à-dire en pyramide entre le plateau 116 et la plateforme 122.

La plateforme 122 comporte une pluralité de points d'appui 126 qui sont destinés à venir sous l'aile 50 pour la soutenir comme cela est décrit ci-dessous.

Le chariot de transport 104 comporte une unité de contrôle qui commande les moyens de déplacement, ici chaque roue motorisée 114, le premier système motorisé et chaque vérin 124 de la plateforme hexapode 120.

Le fonctionnement du système de manutention 100 consiste à venir chercher l'aile 50 qui repose sur la station d'attente 102 avec le chariot de transport 104, à charger l'aile 50 sur le chariot de transport 104 et à la transporter avec le chariot de transport 104 sur le lieu de fixation.

Le déplacement du plateau 116 parallèlement à la direction de translation X permet d'ajuster sa position par rapport à l'aile 50 pour le chargement et d'ajuster la position de l'aile 50 par rapport au fuselage pour la fixation de l'aile 50 sans qu'il soit nécessaire de déplacer la base 112, limitant ainsi les besoins d'un espace important autour du chariot de transport 104.

Lors du montage de l'aile 50, la base 112 est positionnée de manière à présenter sa direction de translation X perpendiculairement à la direction longitudinale du fuselage de l'aéronef.

L'utilisation d'une plateforme hexapode 120 permet un positionnement précis de la plateforme 122 lors du chargement de l'aile 50 et un positionnement précis de l'aile 50 lors de sa fixation au fuselage.

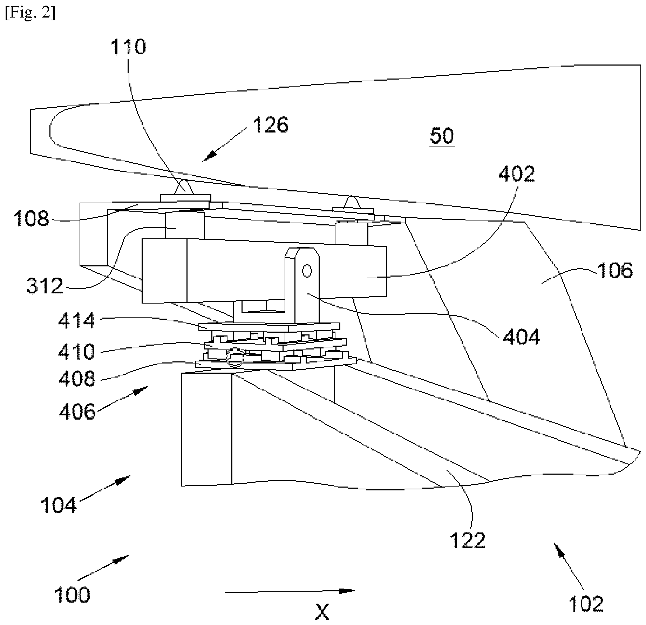

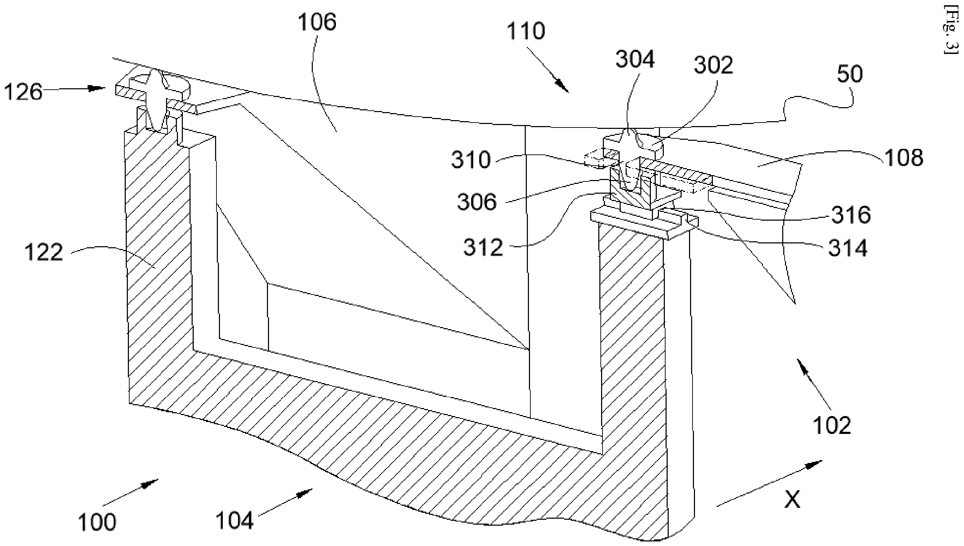

La Fig. 2 montre le transfert de l'aile de la station d'attente 102 au chariot de transport 104 au niveau du poteau 106 du côté de l'extrémité distale et la Fig. 3 montre le transfert de l'aile de la station d'attente 102 au chariot de transport 104 au niveau des poteaux 106 du côté de l'extrémité proximale.

Du côté de l'extrémité distale, le poteau 106 porte deux plots 110 et du côté de l'extrémité proximale, chacun des deux poteaux 106 porte un plot 110.

Chaque plot 110 comporte un épaulement 302 qui sert de surface d'appui sur la palette 108, une partie arrondie 304 qui s'étend au-dessus de l'épaulement 302 et sur lequel l'aile 50 est en appui et un tronc 306 qui s'étend au-dessous de l'épaulement 302 et qui s'insère dans une fente 310 de la palette 108. Chaque palette 108 présente au moins une fente 310 et, pour chaque fente 310, la palette 108 porte un plot 110.

Sur la Fig. 3, les traits mixtes représentent la partie de la palette 108 qui a été coupée.

Ainsi, chaque plot 110 est inséré dans une fente 310 d'une palette 108 avec l'épaulement 302 qui s'appuie sur la palette 108 et l'aile 50 qui est en appui sur la partie arrondie 304.

Pour chaque plot 110, le chariot de transport 104 comporte un réceptacle 312 creux dont la profondeur est inférieure à la longueur du tronc 306 dépassant sous la palette 108. Chaque réceptacle 312 se positionne avec son ouverture orientée vers le haut sous un plot 110. Chaque réceptacle 312 constitue un point d'appui 126.

Lors du soulèvement de la plateforme 122, chaque tronc 306 s'introduit dans un réceptacle 312 et du fait de la différence de longueur, le tronc 306 vient en butée contre le fond du réceptacle 312 ce qui a pour conséquence le soulèvement du plot 110 et donc de l'aile 50. En outre, chaque réceptacle 312 assure le centrage du tronc 306 qui y pénètre.

Le plot 110 n'est alors plus en appui sur la palette 108 et il est transféré sur le chariot de transport 104. Il est alors possible de déplacer le chariot de transport 104 avec l'aile 50.

Pour permettre le dégagement des plots 110, chaque fente 310 présente une ouverture à l'une de ses extrémités.

Selon un mode de réalisation particulier, non représenté, toutes les fentes sont orientées dans le même sens. Par exemple, toutes les fentes 310 sont ouvertes vers la direction inverse à la flèche représentant la direction de translation X. Ainsi, après soulèvement de l'aile 50, un déplacement de la base 112 et/ou du plateau 116 permet, selon la direction inverse à la flèche représentant la direction de translation X, de sortir les plots 110 des fentes 310 et ainsi libérer l'aile 50 de la station d'attente 102.

Selon une autre variante, une position différente des poteaux 106 pourrait permettre d'avoir une ouverture de fente orientée vers la direction de la flèche représentant la direction de translation X.

Dans le mode de réalisation de l'invention présenté sur les Figs. 2 et 3, les ouvertures des fentes 310 qui sont du côté de l'extrémité proximale 52 sont orientées vers les fentes 310 qui sont du côté de l'extrémité distale 54.

Pour permettre un dégagement des fentes, la partie haute du poteau 106 qui est du côté de l'extrémité distale 54 est mobile en rotation autour d'un axe vertical Z qui permet de dégager la palette 108.

Ainsi, d'une manière générale, chaque fente 310 présente une ouverture à l'une de ses extrémités, les fentes 310 d'au moins un poteau 106 sont orientées dans le même sens, les fentes 310 d'au moins un autre poteau 106 sont orientées dans un autre sens, et la partie haute de chaque autre poteau 106 est mobile en rotation autour de l'axe vertical Z.

Dans le mode de réalisation de l'invention présenté sur la Fig. 3, et du côté de l'extrémité proximale 52, il y a un premier réceptacle 312 qui est fixe sur la plateforme 122 afin de servir de point de référence et un deuxième réceptacle 312 qui est mobile en translation selon une direction d'ajustement parallèle à la ligne passant par le centre des deux réceptacles 312 afin d'ajuster la position de ce deuxième réceptacle 312.

Le déplacement du deuxième point d'appui 126 est assuré par tous moyens appropriés, comme par exemple la mise en place d'une nervure 314 solidaire de la plateforme 122 et parallèle à la direction d'ajustement et d'une rainure 316 réalisée sous le réceptacle 312 et dans laquelle s'engage la nervure 314. Bien sûr, un montage inverse est possible.

Dans le mode de réalisation de l'invention présenté sur la Fig. 2, et du côté de l'extrémité distale 54, il y a deux réceptacles 312, où chacun est disposé à une extrémité d'un balancier 402 monté mobile en rotation sur une chape 404 autour d'un axe de rotation qui est ici globalement parallèle à la direction de translation X. La chape 404 est montée sur la plateforme 122.

L'agencement de deux points d'appui 126 écartés du côté de l'extrémité proximale 52 et de deux points d'appui 126 resserrés du côté de l'extrémité distale 54 et montés sur le balancier 402 permet un support isostatique de l'aile 50.

Selon un mode de réalisation particulier, l'un des réceptacles 312 qui sont montés sur le balancier 402 est fixe, tandis que l'autre réceptacle 312 est mobile en translation parallèlement à l'axe longitudinal dudit balancier 402, c'est-à-dire parallèlement à la direction passant par les deux réceptacles 312.

Afin d'ajuster au mieux la position des réceptacles 312, la chape 404 est montée sur la plateforme 122 par l'intermédiaire d'une table croisée 406. La table croisée 406 permet le déplacement de la chape 404 selon deux directions orthogonales et horizontales. Dans le mode de réalisation de l'invention présenté ici, la table croisée 406 est réalisée par la coopération de nervures et de rainures, mais d'autres modes de réalisation sont possibles.

Dans le mode de réalisation présenté ici, la table croisée 406 présente une première plaque 408 solidaire de la plateforme 122 et munie de nervures parallèles à une première direction de translation, une plaque intermédiaire 410 dont une face est munie de rainures coopérant avec les nervures de la première plaque 408 et dont l'autre face est munie de nervures parallèles à une deuxième direction de translation, et une deuxième plaque 414 solidaire de la chape 404 et munie de rainures coopérant avec les nervures de la plaque intermédiaire 410.

Le chariot de transport 104 est équipé d'au moins une caméra 150 qui est montée à une extrémité d'un bras 152 qui est articulé et motorisé. L'autre extrémité du bras 152 est fixée sur une plateforme additionnelle 154 qui est montée mobile en translation sur la base 112 ici parallèlement à la direction de translation X.

Le chariot de transport 104 comporte un deuxième système motorisé qui déplace la plateforme additionnelle 154 en translation.

Le guidage de la plateforme additionnelle 154 est réalisé par tous moyens appropriés comme par exemple des rails 156 fixés à la base 112 parallèlement à la direction de translation X.

La caméra 150, le bras 152 et le deuxième système motorisé sont commandés par l'unité de contrôle.

L'unité de contrôle comporte, reliés par un bus de communication : un processeur ou CPU (« Central Processing Unit » en anglais) ; une mémoire vive RAM (« Random Access Memory » en anglais) ; une mémoire morte ROM (« Read Only Memory » en anglais) ; une unité de stockage telle qu'un disque dur ou un lecteur de support de stockage, tel qu'un lecteur de cartes SD 204 (« Secure Digital » en anglais) ; au moins une interface de communication, permettant à l'unité de contrôle de communiquer avec chaque roue motorisée 114, le premier et le deuxième systèmes motorisés, chaque vérin 124, le bras 152 et la caméra 150.

Le processeur est capable d'exécuter des instructions chargées dans la RAM à partir de la ROM, d'une mémoire externe (non représentée), d'un support de stockage (tel qu'une carte SD), ou d'un réseau de communication. Lorsque l'équipement est mis sous tension, le processeur est capable de lire de la RAM des instructions et de les exécuter. Ces instructions forment un programme d'ordinateur causant la mise en œuvre, par le processeur, de tout ou partie des algorithmes et étapes permettant le fonctionnement du système de manutention 100.

Tout ou partie des algorithmes et étapes peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gâte Array » en anglais) ou un ASIC (« Application-Specific Integrated Circuit » en anglais).

Afin de permettre un déplacement automatique du chariot de transport 104, le chariot de transport 104 est équipé d'un système de géolocalisation en intérieur qui permet une première localisation. Des cibles peuvent également être positionnées sur le sol. La caméra 150 visualise alors ces différentes cibles et peut, par l'intermédiaire de l'unité de contrôle, commander les roues motorisées 114 pour déplacer et positionner le chariot de transport 104 par rapport à ces cibles. Les cibles permettent une localisation plus précise.

Ainsi, lors du placement du chariot de transport 104 pour charger l'aile 50, le système de géolocalisation en intérieur permet un premier positionnement entre les poteaux 106 et la caméra permet une localisation plus précise par reconnaissance des cibles.

Des cibles sont également placées sur la base 112 et la plateforme 122. Ainsi, par l'intermédiaire de la caméra 150, l'unité de contrôle connaît les positions de ces éléments et peut les corriger si nécessaire. La mise en place de telles cibles sur la base 112 et la plateforme 122 permet un déplacement automatique lors de la prise en charge de l'aile 50 et de son positionnement pour le montage.

Dans le cas de l'assemblage des deux ailes 50 d'un aéronef, l'utilisation d'un chariot de transport 104 pour chaque aile 50 permet de positionner chaque aile 50 de part et d'autre d'une nervure centrale de la structure de l'aéronef.

## Revendications

1. Chariot de transport (104) destiné à transporter une charge (50) et comportant :
- une base (112) comportant des moyens de déplacement (114),
- un plateau (116) monté mobile en translation sur la base (112) selon une direction de translation X,
- un premier système motorisé qui déplace le plateau (116),
- une plateforme hexapode (120) qui comporte une plateforme (122) et un ensemble de six vérins (124) où chacun est monté articulé entre le plateau (116) et la plateforme (122) et où la plateforme (122) comporte une pluralité de points d'appui (126) destinés à venir sous la charge (50), et
- une unité de contrôle qui commande les moyens de déplacement (114), le premier système motorisé et chaque vérin (124).

2. Chariot de transport (104) selon la revendication 1, **caractérisé en ce que** chaque point d'appui (126) prend la forme d'un réceptacle (312) avec son ouverture orientée vers le haut.

3. Chariot de transport (104) selon la revendication 2, **caractérisé en ce qu'**il comporte un premier réceptacle (312) fixe sur la plateforme (122) et un deuxième réceptacle (312) mobile en translation selon une direction d'ajustement parallèle à la ligne passant par le centre des deux réceptacles (312).

4. Chariot de transport (104) selon l'une des revendications 2 ou 3, **caractérisé en ce qu'**il comporte une chape (404) montée sur la plateforme (122), un balancier (402) monté mobile en rotation sur la chape (404) et deux réceptacles (312) où chacun est disposé à une extrémité du balancier (402).

5. Chariot de transport (104) selon la revendication 4, **caractérisé en ce que** la chape (404) est montée sur la plateforme (122) par l'intermédiaire d'une table croisée (406).

6. Chariot de transport (104) selon l'une des revendications précédentes, **caractérisé en ce qu'**il comporte une plateforme additionnelle (154) monté mobile en translation sur la base (112), un bras (152) articulé, motorisé et fixé par une de ses extrémités sur la plateforme additionnelle (154), une caméra (150) qui est montée à une autre extrémité du bras (152), et un deuxième système motorisé qui déplace la plateforme additionnelle (154), et où l'unité de contrôle commande la caméra (150), le bras (152) et le deuxième système motorisé.

7. Système de manutention (100) comportant une station d'attente (102) et un chariot de transport (104) selon l'une des revendications 2 à 6, où la station d'attente (102) comporte une pluralité de poteaux (106) où chacun est ancré dans le sol et où la partie haute de chaque poteau (106) présente une palette (108) avec au moins une fente (310) et qui, pour chaque fente (310), la palette (108) porte un plot (110), où chaque plot (110) comporte un épaulement (302) en appui sur la palette (108), une partie arrondie (304) s'étendant au-dessus de l'épaulement (302) et destinée à supporter la charge (50), et un tronc (306) s'étendant au-dessous de l'épaulement (302) et qui s'insère dans la fente (310), et où pour chaque plot (110), le chariot de transport (104) comporte un réceptacle (312) dont la profondeur est inférieure à la longueur du tronc (306) dépassant sous la palette (108).

8. Système de manutention (100) selon la revendication 7, **caractérisé en ce que** chaque fente (310) présente une ouverture à l'une de ses extrémités et **en ce que** toutes les ouvertures sont orientées dans le même sens.

9. Système de manutention (100) selon la revendication 7, **caractérisé en ce que** chaque fente (310) présente une ouverture à l'une de ses extrémités, **en ce que** les fentes (310) d'au moins un poteau (106) sont orientées dans le même sens, **en ce que** les fentes (310) d'au moins un autre poteau (106) sont orientées dans un autre sens, et **en ce que** la partie haute de chaque autre poteau (106) est mobile en rotation autour d'un axe vertical.

## Patentansprüche

1. Transportwagen (104), welcher dazu bestimmt ist, eine Last (50) zu transportieren, und umfasst:
- einen Unterteil (112), der Verlagerungsmittel (114) umfasst,
- eine Platte (116), die translatorisch beweglich in einer Translationsrichtung X auf dem Unterteil (112) angebracht ist,
- ein erstes motorisiertes System, welches die Platte (116) verlagert,
- eine Hexapod-Plattform (120), welche eine Plattform (122) und eine Anordnung von sechs Zylindern (124) umfasst, wobei jeder gelenkig zwischen der Platte (116) und der Plattform (122) angebracht ist und wobei die Plattform (122) mehrere Auflagepunkte (126) umfasst, die dazu bestimmt sind, unter die Last (50) zu gelangen, und
- eine Steuereinheit, welche die Verlagerungsmittel (114), das erste motorisierte System und jeden Zylinder (124) steuert.

2. Transportwagen (104) nach Anspruch 1, **dadurch gekennzeichnet, dass** jeder Auflagepunkt (126) die Form einer Aufnahme (312) aufweist, deren Öffnung nach oben gerichtet ist.

3. Transportwagen (104) nach Anspruch 2, **dadurch gekennzeichnet, dass** er eine erste Aufnahme (312), die auf der Plattform (122) fest angeordnet ist, und eine zweite Aufnahme (312), die translatorisch beweglich in einer Verstellrichtung ist, die zu der durch den Mittelpunkt der zwei Aufnahmen (312) verlaufenden Linie parallel ist, umfasst.

4. Transportwagen (104) nach einem der Ansprüche 2 oder 3, **dadurch gekennzeichnet, dass** er ein Gabelstück (404), das auf der Plattform (122) angebracht ist, einen Schwinghebel (402), der drehbeweglich auf dem Gabelstück (404) angebracht ist, und zwei Aufnahmen (312), von denen jede an einem Ende des Schwinghebels (402) angeordnet ist, umfasst.

5. Transportwagen (104) nach Anspruch 4, **dadurch gekennzeichnet, dass** das Gabelstück (404) über einen Kreuztisch (406) auf der Plattform (122) angebracht ist.

6. Transportwagen (104) nach einem der vorhergehenden Ansprüche, **dadurch gekennzeichnet, dass** er eine zusätzliche Plattform (154), die translatorisch beweglich auf dem Unterteil (112) angebracht ist, einen Arm (152), der gelenkig, motorisiert und an einem seiner Enden auf der zusätzlichen Plattform (154) befestigt ist, eine Kamera (150), welche an einem anderen Ende des Armes (152) angebracht ist, und ein zweites motorisiertes System, welches die zusätzliche Plattform (154) verlagert, umfasst, und wobei die Steuereinheit die Kamera (150), den Arm (152) und das zweite motorisierte System steuert.

7. Handhabungssystem (100), welches eine Wartestation (102) und einen Transportwagen (104) nach einem der Ansprüche 2 bis 6 umfasst, wobei die Wartestation (102) mehrere Säulen (106) umfasst, wobei jede im Boden verankert ist und wobei der obere Teil jeder Säule (106) eine Palette (108) mit wenigstens einem Schlitz (310) aufweist und wobei, für jeden Schlitz (310), die Palette (108) einen Klotz (110) trägt, wobei jeder Klotz (110) einen Ansatz (302), der auf der Palette (108) aufliegt, einen abgerundeten Teil (304), der sich oberhalb des Ansatzes (302) erstreckt und dazu bestimmt ist, die Last (50) zu stützen, und einen Schaft (306), der sich unterhalb des Ansatzes (302) erstreckt und der in den Schlitz (310) eingreift, umfasst, und wobei der Transportwagen (104) für jeden Klotz (110) eine Aufnahme (312) umfasst, deren Tiefe kleiner als die Länge des Schaftes (306) ist, die unter der Palette (108) hervorragt.

8. Handhabungssystem (100) nach Anspruch 7, **dadurch gekennzeichnet, dass** jeder Schlitz (310) eine Öffnung an einem seiner Enden aufweist, und dadurch, dass alle Öffnungen in derselben Richtung ausgerichtet sind.

9. Handhabungssystem (100) nach Anspruch 7, **dadurch gekennzeichnet, dass** jeder Schlitz (310) eine Öffnung an einem seiner Enden aufweist, dadurch, dass die Schlitze (310) wenigstens einer Säule (106) in derselben Richtung ausgerichtet sind, dadurch, dass die Schlitze (310) wenigstens einer anderen Säule (106) in einer anderen Richtung ausgerichtet sind, und dadurch, dass der obere Teil jeder anderen Säule (106) drehbeweglich um eine vertikale Achse ist.

## Claims

1. Transport trolley (104) intended to transport a load (50) and comprising:
- a base (112) comprising displacement means (114),
- a deck (116) mounted to be translationally mobile on the base (112) in a direction of translation X,
- a first motorized system which displaces the deck (116),
- a hexapod platform (120) which comprises a platform (122) and a set of six jacks (124) in which each is mounted articulated between the deck (116) and the platform (122) and in which the platform (122) comprises a plurality of bearing points (126) intended to come under the load (50), and
- a control unit which controls the displacement means (114), the first motorized system and each jack (124).

2. Transport trolley (104) according to Claim 1, **characterized in that** each bearing point (126) takes the form of a receptacle (312) with its opening oriented upwards.

3. Transport trolley (104) according to Claim 2, **characterized in that** it comprises a first receptacle (312) fixed onto the platform (122) and a second receptacle (312) that is translationally mobile in a direction of adjustment parallel to the line passing through the centre of the two receptacles (312).

4. Transport trolley (104) according to one of Claims 2 or 3, **characterized in that** it comprises a yoke joint (404) mounted on the platform (122), a rocker arm (402) mounted to be rotationally mobile on the yoke joint (404) and two receptacles (312) in which each is arranged at an end of the rocker arm (402).

5. Transport trolley (104) according to Claim 4, **characterized in that** the yoke joint (404) is mounted on the platform (122) via a compound sliding stage (406).

6. Transport trolley (104) according to one of the preceding claims, **characterized in that** it comprises an additional platform (154) mounted to be translationally mobile on the base (112), an articulated arm (152), motorized and fixed by one of its ends onto the additional platform (154), a camera (150) which is mounted at another end of the arm (152), and a second motorized system which displaces the additional platform (154), and in which the control unit controls the camera (150), the arm (152) and the second motorized system.

7. Handling system (100) comprising a holding station (102) and a transport trolley (104) according to one of Claims 2 to 6, in which the holding station (102) comprises a plurality of posts (106) in which each is anchored in the ground and in which the top part of each post (106) has a pallet (108) with at least one slit (310) and in which, for each slit (310), the pallet (108) bears a block (110), in which each block (110) comprises a shoulder (302) bearing on the pallet (108), a rounded part (304) extending above the shoulder (302) and intended to support the load (50), and a trunk (306) extending under the shoulder (302) and which is inserted into the slit (310), and in which, for each block (110), the transport trolley (104) comprises a receptacle (312) whose depth is less than the length of the trunk (306) extending under the pallet (108).

8. Handling system (100) according to Claim 7, **characterized in that** in each slit (310) has an opening at one of its ends and **in that** all the openings are oriented in the same direction.

9. Handling system (100) according to Claim 7, **characterized in that** each slit (310) has an opening at one of its ends, **in that** the slits (310) of at least one post (106) are oriented in the same direction, **in that** the slits (310) of at least one other post (106) are oriented in another direction, and **in that** the top part of each other post (106) is rotationally mobile about a vertical axis.
